# EUROPEAN PATENT APPLICATION

(11) **EP 4 460 123 A1**
(43) Date of publication of application: **06.11.2024**
(21) Application number: 21969821.4
(22) Date of filing: 31.12.2021
(51) Int. Cl.: H04W 72/04

(54) **METHODS AND APPARATUSES FOR DETERMINING TIME DOMAIN RESOURCE TRANSMISSION POSITION**

(71) Applicant: Beijing Xiaomi Mobile Software Co., Ltd., Beijing 100085 (CN)
(72) Inventor: QIAO, Xuemei, Beijing 100085 (CN)
(74) Representative: Pfitzner, Hannes
(86) International application number: PCT/CN2021/143972
(87) International publication number: WO 2023/123476

(57) **Abstract**

Disclosed in the embodiment of the present disclosure are methods and apparatuses for determining time domain resource transmission positions. The method comprises: a terminal device performing synchronization signal block (SSB) measurement to determine a target SSB index, the target SSB index corresponding to a target beam direction; determining a target repeated transmission occasion (TO) according to the target SSB index; and carrying out small data transmission (SDT) according to the target repeated TO, the target repeated TO being TO corresponding to the Nth repeated transmission in SDT, and N being a positive integer. By implementing the embodiments of the present disclosure, repeated transmission of configured grant CG-SDT may be realized.

## Description

### TECHNICAL FIELD

The present disclosure relates to a field of communication technologies, and particularly to a method and an apparatus for determining a time-domain resource transmission position.

### BACKGROUND

In related arts, it is proposed to support small data transmission (SDT) in an inactive state, and the SDT supports SDT based on random access process and SDT based on semi-persistent configuration.

For configured grant CG-SDT, a terminal device obtains an optimum downlink beam by measuring different synchronization signal and PBCH blocks (SSBs), and then selects an associated physical uplink shared channel occasion (PO) to perform the SDT. In this way, the optimum downlink beam can be implicitly reported to a base station.

### SUMMARY

Embodiments of the present disclosure provides a method and an apparatus for determining a time-domain resource transmission position, which may implement CG-SDT with repetitions.

In a first aspect, a method for determining a time-domain resource transmission position is provided according to an embodiment of the present disclosure. The method is performed by a terminal device and includes: performing a synchronization signal and PBCH block (SSB) measurement to determine a target SSB index, in which the target SSB index corresponds to a target beam direction; determining a target repetition transmission occasion (TO) according to the target SSB index; and performing small data transmission (SDT) according to the target repetition TO, in which the target repetition TO is a TO corresponding to an N-th repetition in the SDT, and N is a positive integer.

In this technical solution, the terminal device may implement CG-SDT with repetitions.

In a second aspect, another method for determining a time-domain resource transmission position is provided according to an embodiment of the present disclosure. The method is performed by a base station and includes: receiving small data transmission (SDT) of a terminal device, and determining a target repetition transmission occasion (TO), in which the target repetition TO is a TO corresponding to an N-th repetition in the SDT, and N is a positive integer; and determining a target SSB index according to the target repetition TO, in which the target SSB index corresponds to a target beam direction.

In a third aspect, a communication device is provided according to embodiments of the present disclosure. The communication device has part of or all functions of a terminal device for implementing the method as described in the first aspect. For example, the functions of the communication device may possess functions in part of or all of embodiments in the disclosure or may possess functions of any one embodiment in the disclosure independently. The functions may be implemented by hardware, or by executing corresponding software by hardware. The software or hardware includes one or more units or modules corresponding to the above functions.

In an implementation, a structure of the communication device may include a transceiver module and a processing module, and the processing module is configured to support the communication device to perform corresponding functions in the foregoing method. The transceiver module is configured to support communication between the communication device and other devices. The communication device may further include a storage module, which is configured to be coupled with the transceiver module and the processing module, and stores necessary computer programs and data of the communication device.

In an implementation, the communication device includes a processing module, configured to perform a synchronization signal and PBCH block (SSB) measurement to determine a target SSB index, in which the target SSB index corresponds to a target beam direction; determine a target repetition transmission occasion (TO) according to the target SSB index; and perform small data transmission (SDT) according to the target repetition TO, in which the target repetition TO is a TO corresponding to an N-th repetition in the SDT, and N is a positive integer.

In a fourth aspect, another communication device is provided according to embodiments of the present disclosure. The communication device has part of or all functions of a base station for implementing the method as described in the second aspect. For example, the functions of the communication device may possess functions in part of or all of embodiments in the disclosure or may possess functions of any one embodiment in the disclosure independently. The functions may be implemented by hardware, or by executing corresponding software by hardware. The software or hardware includes one or more units or modules corresponding to the above functions.

In an implementation, a structure of the communication device may include a transceiver module and a processing module, and the processing module is configured to support the communication device to perform corresponding functions in the foregoing method. The transceiver module is configured to support communication between the communication device and other devices. The communication device may further include a storage module, which is configured to be coupled with the transceiver module and the processing module, and stores necessary computer programs and data of the communication device.

In an implementation, the communication device includes a transceiver module, configured to receive small data transmission (SDT) of a terminal device, and determine a target repetition transmission occasion (TO), in which the target repetition TO is a TO corresponding to an N-th repetition in the SDT, and N is a positive integer; and a processing module, configured to determine a target SSB index according to the target repetition TO, in which the target SSB index corresponds to a target beam direction.

In a fifth aspect, a communication device including a processor is provided according to embodiments of the disclosure. When the processor calls a computer program in a memory, the method according to the first aspect is performed.

In a sixth aspect, a communication device including a processor is provided according to embodiments of the disclosure. When the processor calls a computer program in a memory, the method according to the second aspect is performed.

In a seventh aspect, a communication device including a processor and a memory storing a computer program is provided according to embodiments of the disclosure. The processor is configured to execute the computer program stored on the memory, causing the communication device to perform the method according to the first aspect.

In an eighth aspect, a communication device including a processor and a memory storing a computer program is provided according to embodiments of the disclosure. The processor is configured to execute the computer program stored on the memory, causing the communication device to perform the method according to the second aspect.

In a ninth aspect, a communication device is provided according to embodiments of the disclosure. The communication device includes a processor and an interface circuit. The interface circuit is configured to receive code instructions and transmit the code instructions to the processor; and the processor is configured to run the code instructions causing the device to perform the method according to the above first aspect.

In a tenth aspect, a communication device is provided according to embodiments of the disclosure. The communication device includes a processor and an interface circuit. The interface circuit is configured to receive code instructions and transmit the code instructions to the processor; and the processor is configured to run the code instructions causing the device to perform the method according to the above second aspect.

In an eleventh aspect, a system for determining a time-domain resource transmission position is provided according to embodiments of the disclosure. The system includes the communication device according to the third aspect and the communication device according to the fourth aspect, or the system includes the communication device according to the fifth aspect and the communication device according to the sixth aspect, or the system includes the communication device according to the seventh aspect and the communication device according to the eighth aspect, or the system includes the communication device according to the ninth aspect and the communication device according to the tenth aspect.

In a twelfth aspect, a computer-readable storage medium is provided according to embodiments of the present disclosure. The computer-readable storage medium is configured to store instructions used for a terminal device. When the instructions are executed, the method as described in the first aspect is implemented by the terminal device.

In a thirteenth aspect, a computer-readable storage medium is provided according to embodiments of the present disclosure. The computer-readable storage medium is configured to store instructions used for a base station. When the instructions are executed, the method as described in the second aspect is implemented by the base station.

In a fourteenth aspect, a computer program product including a computer program is further provided in the present disclosure. The computer program runs on a computer, causing the computer to perform the method according to the first aspect.

In a fifteenth aspect, a computer program product including a computer program is further provided in the present disclosure. The computer program runs on a computer, causing the computer to perform the method according to the second aspect.

In a sixteenth aspect, a chip system is provided in the present disclosure. The chip system includes at least one processor and an interface, and configured to support a terminal device to implement functions involved in the first aspect, for example, determining or processing at least one of data or information the involved in the above method. In a possible design, the chip system further includes a memory, and the memory is configured to store necessary computer programs and data of the terminal device. The chip system may consist of chips, or may include a chip and other discrete elements.

In a seventeenth aspect, a chip system is provided in the present disclosure. The chip system includes at least one processor and an interface, and configured to support a base station to implement functions involved in the second aspect, for example, determining or processing at least one of data or information the involved in the above method. In a possible design, the chip system further includes a memory, and the memory is configured to store necessary computer programs and data of the terminal device. The chip system may consist of chips, or may include a chip and other discrete elements.

In an eighteenth aspect, a computer program is provided in the present disclosure. The computer program runs on a computer, causing the computer to perform the method according to the first aspect.

In a nineteenth aspect, a computer program is provided in the present disclosure. The computer program runs on a computer, causing the computer to perform the method according to the second aspect.

### BRIEF DESCRIPTION OF THE DRAWINGS

In order to explain embodiments of the disclosure or technical solutions in the related art more clearly, the drawings described in the embodiments of the disclosure or required in the related art will be briefly introduced below.
FIG. 1 is a schematic diagram illustrating an architecture of a communication system according to an embodiment of the present disclosure.
FIG. 2 is a flowchart illustrating a method for determining a time-domain resource transmission position according to an embodiment of the present disclosure.
FIG. 3 is a schematic diagram illustrating a TO configuration with repetitions according to an embodiment of the present disclosure.
FIG. 4 is a flowchart illustrating another method for determining a time-domain resource transmission position according to an embodiment of the present disclosure.
FIG. 5 is a schematic diagram illustrating another TO configuration with repetitions according to an embodiment of the present disclosure.
FIG. 6 is a flowchart illustrating yet another method for determining a time-domain resource transmission position according to an embodiment of the present disclosure.
FIG. 7 is a flowchart illustrating yet another method for determining a time-domain resource transmission position according to an embodiment of the present disclosure.
FIG. 8 is a flowchart illustrating yet another method for determining a time-domain resource transmission position according to an embodiment of the present disclosure.
FIG. 9 is a schematic diagram illustrating a structure of a communication device according to an embodiment of the present disclosure.
FIG. 10 is a schematic diagram illustrating a structure of another communication device according to an embodiment of the present disclosure.
FIG. 11 is a schematic diagram illustrating a structure of a chip according to an embodiment of the present disclosure.

### DETAILED DESCRIPTION

In order to facilitate understanding of the present disclosure, some concepts involved in embodiments of the present disclosure are briefly introduced here.

### 1. Transmission occasion (TO for short)

The transmission occasion includes a time-domain resource for transmitting data once. One transmission occasion includes one or more symbols. When there are a plurality of transmission occasions and the plurality of transmission occasions are used for repetitions, a plurality of pieces of same data are repeatedly transmitted on the plurality of transmission occasions. Under the circumstances, one data transmission at one transmission occasion may be referred to as one repetition. The plurality of pieces of same data refer to a plurality of same or different RVs (redundancy version) obtained after channel encoding is performed on a same piece of information bits.

In order to better understand a method and an apparatus for determining a time-domain resource transmission position disclosed in embodiments of the present disclosure, a communication system to which embodiments of the present disclosure are applied is firstly described below.

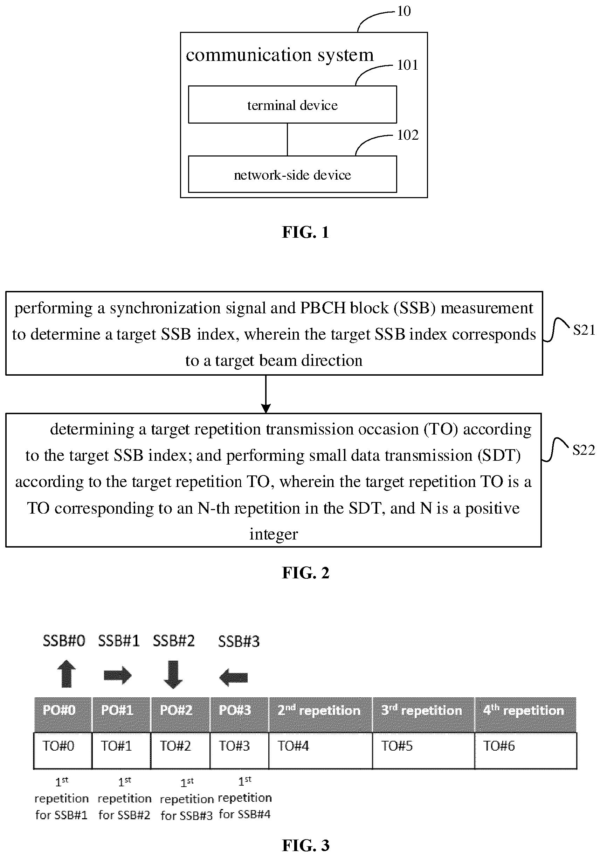

Referring to FIG. 1, FIG. 1 is a schematic diagram illustrating an architecture of a communication system according to an embodiment of the present disclosure. The communication system may include, but is not limited to, one base station and one terminal device, a number and a form of devices shown in FIG. 1 are only for example and do not constitute a limitation of embodiments of the present disclosure, and two or more base stations and two or more terminal devices may be included in actual applications. The communication system as illustrated in FIG. 1 includes one base station 101 and one terminal device 102 as an example.

It needs to be noted that the technical solution in embodiments of the present disclosure is applicable for various communication systems, for example, a long term evolution (LTE) system, a 5th generation (5G) mobile communication system, a 5G new radio (NR) system or other future new mobile communication systems, etc. It should also be noted that a sidelink in an embodiment of the present disclosure may also be referred to as a side link or a direct link.

The base station 101 in embodiments of the disclosure is an entity for transmitting or receiving a signal at a network side. For example, the base station 101 may be an evolved NodeB (eNB), a transmission reception point (TRP), a next generation NodeB (gNB) in a NR system, a base station in other future mobile communication systems, or an access node in a wireless fidelity (WiFi) system, etc. A specific technology and a specific device form adopted by the base station are not limited in embodiments of the present disclosure. The base station according to embodiments of the present disclosure may consist of a central unit (CU) and a distributed unit (DU). The CU may also be referred to as a control unit, and a structure of the CU-DU are used to separate the base station such as a protocol layer of the base station, and functions of a part of the protocol layer are placed in the CU for centralized control, and functions of a remaining part or all of the protocol layer are distributed in the DU, and the DU is centrally controlled by the CU.

The terminal device 102 in embodiments of the disclosure is an entity for receiving or transmitting a signal at a user side, and for example, a mobile phone. The terminal device may be referred to as a terminal, a user equipment (UE), a mobile station (MS), a mobile terminal (MT), etc. The terminal device may be an automobile with a communication function, a smart automobile, a mobile phone, a wearable device, a tablet computer (Pad), a computer with a wireless transceiving function, a virtual reality (VR) terminal device, an augmented reality (AR) terminal device, a wireless terminal device in industrial control, a wireless terminal device in self-driving, a wireless terminal device in a remote medical surgery, a wireless terminal device in a smart grid, a wireless terminal device in transportation safety, a wireless terminal device in a smart city, a wireless terminal device in a smart home, etc. A specific technology and a specific device form adopted by the terminal device are not limited in embodiments of the present disclosure.

It may be understood that the communication system described in embodiments of the present disclosure are intended to explain technical solutions of embodiments of the present disclosure more clearly, and does not constitute a limitation to the technical solutions provided by embodiments of the present disclosure. Those skilled in the art know that, with evolution of a system architecture and emergence of a new business scenario, the technical solutions provided in embodiments of the present disclosure are equally applied to similar technical problems.

A method and an apparatus for determining a time-domain resource transmission position according to the disclosure are described in detail below with reference to the accompanying drawings.

Referring to FIG. 2, FIG. 2 is a flowchart illustrating a method for determining a time-domain resource transmission position according to an embodiment of the present disclosure.

As illustrated in FIG. 2, the method is performed by a terminal device, and may include, but is not limited to, following steps.

At step S21, a synchronization signal and PBCH block (SSB) measurement is performed to determine a target SSB index. The target SSB index corresponds to a target beam direction.

In an embodiment of the present disclosure, the terminal device determines the target SSB index by performing the SSB (synchronization signal and PBCH block) measurement. The target SSB index corresponds to the target beam direction, a target beam may be an optimum beam, and the target SSB index corresponds to an optimum beam direction.

It should be noted that, in an embodiment of the present disclosure, the target SSB index corresponds to the target beam direction, and the target beam may also be other beam except for the optimal beam, which is not specifically limited in an embodiment of the present disclosure.

In some embodiments, signal quality measurements are performed on a plurality of SSBs to determine a target SSB, and determining a target SSB index of the target SSB.

Illustratively, in an embodiment of the present disclosure, the terminal device determines the target SSB by measuring an SS-RSRP (synchronization signal reference signal received power, or synchronization signal based reference signal received power), and the target SSB may be an optimum SSB, a signal quality of a measurement of the optimum SSB is optimum, and then the target SSB index of the target SSB is determined.

At step S22, a target repetition transmission occasion (TO) is determined according to the target SSB index, and small data transmission (SDT) is performed according to the target repetition TO. The target repetition TO is a TO corresponding to an N-th repetition in the SDT, and N is a positive integer.

It is noted that, in an embodiment of the present disclosure, each of the plurality of SSBs of an SSB burst corresponds to a TO corresponding to the N-th repetition in the SDT. By measuring the plurality of SSBs in the SSB burst, an SSB with a stronger channel quality is selected as the target SSB, the TO corresponding to the N-th repetition in the corresponding SDT is determined according to the target SSB, and the TO corresponding to the N-th repetition in the SDT is determined as the target repetition TO.

In an embodiment of the present disclosure, the terminal device may perform the SDT according to the target repetition TO after determining the target repetition TO.

It can be understood that, in an embodiment of the present disclosure, TOs corresponding to other repetitions except for the N-th repetition in the SDT may be associated with the target SSB for the target SSB index. Therefore, all repetitions in the SDT are determined under the case that the target SSB index is determined.

In some embodiments, the SSB measurement is performed to determine the target SSB index. The target SSB index corresponds to the target beam direction, and the target repetition TO is determined according to the target SSB index, and the small data transmission is performed according to the target repetition TO. The target repetition TO is the TO corresponding to the N-th repetition in the SDT, and N is a positive integer. A value N in the TO corresponding to the N-th repetition in the SDT which is the target repetition TO is determined according to a protocol, alternatively, the value N in the TO corresponding to the N-th repetition in the SDT which is the target repetition TO is determined according to a configuration or an instruction of the base station.

Illustratively, under a case that the value N in the TO corresponding to the N-th repetition in the SDT which is the target repetition TO is determined as 1 according to the protocol, a TO corresponding to a first repetition in the SDT is determined as the target repetition TO according to the protocol, and the target repetition TO is selected to perform the first repetition of the SDT.

Illustratively, under a case that the value N in the TO corresponding to the N-th repetition in the SDT which is the target repetition TO is determined as 1 according to the configuration or the instruction of the base station, a TO corresponding to a first repetition in the SDT is determined as the target repetition TO according to the configuration or the instruction of the base station, and the target repetition TO is selected to perform the first repetition of the SDT.

It should be noted that the above example is only for illustration and cannot as a specific limitation to embodiments of the present disclosure. The value N, determined according to the protocol, or according to the configuration or the instruction of the base station, in the TO corresponding to the N-th repetition in the SDT which is the target repetition TO may be other parameters than 1.

In some embodiments, a number of repetitions is M times, and N is less than or equal to M, M is a positive integer, and a number of TOs is taken by subtracting 1 from a sum of a number of SSBs and the number of repetitions M.

In an example embodiment, as illustrated in FIG. 3, there are 4 SSBs in an SSB set (a synchronization signal and PBCH block set) configured by CG (configured grant), and the number of repetitions M is 4 times, then it may determine the number of TOs by subtracting 1 from a sum of a number of SSBs, 4, and the number of repetitions, 4, and the number of TOs is obtained as 7.

Assuming that N is 1, first 4 TOs are used for a first repetition in transmission of the SDT, and last three TOs are used for remaining three repetitions in transmission of the SDT respectively.

Of course, the example shown in FIG. 3 is only for illustration. In embodiments of the present disclosure, N can also be 3, and can also be that a third repetition in the SDT is associated with the target SSB index, then a first TO is used for a first repetition in transmission of the SDT, a second TO is used for a second repetition in transmission of the SDT, 3rd, 4th, 5th, and 6th TOs are used for a third repetition in transmission of the SDT, and a 7th TO is used for a fourth repetition in transmission of the SDT.

In an embodiment of the present disclosure, N may be configured or indicated by the base station, may also be pre-configured in the protocol, or may be indicated in other implicit ways, which is not specifically limited in embodiments of the present disclosure.

In some embodiments, SSB indexes associated with TOs corresponding to M times of repetitions are the target SSB index.

In an embodiment of the present disclosure, on the basis that the target repetition TO is associated with the target SSB index, in the M times of repetitions, except that the target repetition TO of the N-th repetition is associated with the target SSB index, other times of repetitions can also be associated with the target SSB index.

In some embodiments, the TOs corresponding to the M times of repetitions form one target physical uplink shared channel occasion (PO).

In an example embodiment, please continue to refer to FIG. 3, there are 4 SSBs in an SSB set (a synchronization signal and PBCH block set) configured by CG (configured grant), and the number of repetitions M is 4 times, then it may determine the number of TOs by subtracting 1 from a sum of a number of SSBs, 4, and the number of repetitions, 4, and the number of TOs is obtained as 7.

In an example, assuming that N is 1, first 4 TOs are used for a first repetition in transmission of the SDT, and last three TOs are used for remaining three repetitions in transmission of the SDT respectively. The terminal device determines that a signal quality of SSB#2 corresponding to TO#2 is optimum by performing the SSB measurement, and the terminal device may select TO#2 to perform the first repetition in the SDT, and then complete remaining three repetitions through TO#4, TO#5 and TO#6.

TO#2, TO#4, TO#5 and TO#6 can form one target PO.

It is noted that TO#4, TO#5 and TO#6 occupied by the remaining three repetitions may also be associated with SSB#1.

It is also noted that in an embodiment of the present disclosure, TO#0, TO#1, TO#2, TO#3, TO#4, TO#5, and TO#6 may form one target PO.

In another example, assuming that N is 1, first 4 TOs are used for a first repetition in transmission of the SDT, and last three TOs are used for remaining three repetitions in transmission of the SDT respectively. The terminal device determines that a signal quality of SSB#1 corresponding to TO#1 is optimum by performing the SSB measurement, and the terminal device may select TO#1 to perform the first repetition in the SDT, and then complete remaining three repetitions through TO#4, TO#5 and TO#6.

TO#1, TO#4, TO#5 and TO#6 can form one target PO.

It is noted that TO#4, TO#5 and TO#6 occupied by the remaining three repetitions may also be associated with SSB#1.

It is also noted that in an embodiment of the present disclosure, TO#0, TO#1, TO#2, TO#3, TO#4, TO#5, and TO#6 may form one target PO.

In the above example embodiments of the present disclosure, the number of TOs is that the number of SSBs, 4, plus the number of repetitions, 4, then minus 1, and the number of TOs is determined to be 7.

It is noted that, for M times of repetitions of the SDT, each SSB may correspond to M TOs, and the M TOs are used to perform M repetitions of the SDT. In this case, if there are K SSBs in the SSB burst, the number of TOs needs to be configured as K*M, where K and M are both positive integers.

However, in an embodiment of the present disclosure, it is simply required to configure the number of TOs as that the number of SSBs, K, plus the number of repetitions M then minus 1 thus implementing M repetitions of the SDT, which greatly saves time-frequency resources and improves a spectral efficiency.

In some embodiments, one configured grant period of the SDT comprises a plurality of Pos. A redundancy version (RV) sequence corresponding to TOs in the target PO are {0,0,0,0}, or {0,3,0,3}, or {0,2,3,1}. A RV corresponding to a TO in other POs except for the target PO in a plurality of POs is RV0.

By implementing embodiments of the present disclosure, the terminal device performs the synchronization signal and PBCH block (SSB) measurement to determine the target SSB index, in which the target SSB index corresponds to a target beam direction, and determines the target repetition transmission occasion (TO) according to the target SSB index, and performs the small data transmission (SDT) according to the target repetition TO, in which the target repetition TO is the TO corresponding to the N-th repetition in the SDT, and N is a positive integer. Therefore, CG-SDT with repetitions may be implemented, time-frequency resources can be greatly saved, and a spectral efficiency can be improved.

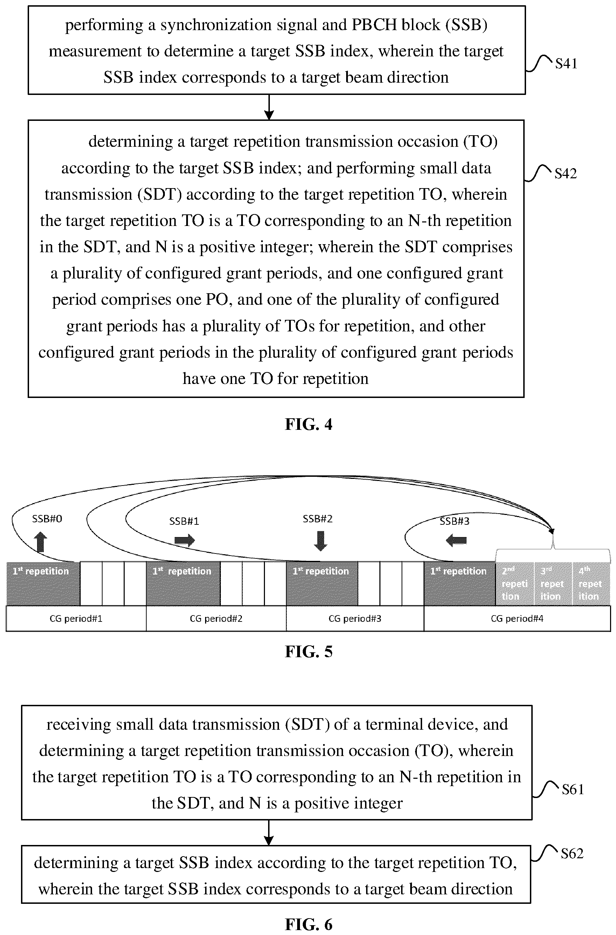

Referring to FIG. 4, FIG. 4 is a flowchart illustrating another method for determining a time-domain resource transmission position according to an embodiment of the present disclosure.

As illustrated in FIG. 4, the method is performed by a terminal device, and may include, but is not limited to, following steps.

At step S41, a synchronization signal and PBCH block (SSB) measurement is performed to determine a target SSB index. The target SSB index corresponds to a target beam direction.

Relevant description of S41 in an embodiment of the present disclosure may refer to relevant description of S21 in the foregoing examples, and details are not repeated here.

At step S42, a target repetition transmission occasion (TO) is determined according to the target SSB index, and small data transmission (SDT) is performed according to the target repetition TO. The target repetition TO is a TO corresponding to an N-th repetition in the SDT, and N is a positive integer. The SDT includes a plurality of configured grant periods, and one configured grant period includes one PO, and one of the plurality of configured grant periods has a plurality of TOs for repetition, and other configured grant periods in the plurality of configured grant periods have one TO for repetition.

In some embodiments, for an L-th repetition corresponding to the TO for repetition in the other configured grant periods, L is pre-configured by a protocol, or configured or indicated by a base station, L is a positive integer.

It can be understood that one configured grant period in the other configured grant periods has one TO for repetition, and the only TO can be used for any repetition, or, in an embodiment, can be used for the L-th repetition corresponding to one TO for repetition in one configured grant period among the other configured grant periods according to the pre-configured protocol, or the configuration or the indication of the a base station.

In an embodiment of the present disclosure, different SSBs are associated with different configured grant periods, one configured grant period in the plurality of configured grant periods has the plurality of TOs for repetition, and which configured grant period in the plurality of configured grant periods may be determined as one configured grant period with the plurality of TOs for repetition based on the configuration or the instruction of the base station.

In some embodiments, a same hybrid automatic repeat request (HARQ) process number (HPN) is used for the plurality of configured grant periods.

In an example embodiment, the terminal device determines the target SSB index by performing the SSB measurement, and the target SSB index corresponds to the target beam direction, the signal quality of the target beam is optimum. As illustrated in FIG. 5, the SDT includes 4 CG periods (configured grant periods), one CG cycle includes one PO, CG period #4 in the 4 CG cycles has 4 TOs for repetition, CG period #1, CG period #2 and CG period #3 in the 4 CG periods has one TO for repetition.

In an example, by performing the SSB measurement, the terminal device determines to perform a first repetition on a 1^{st} repetition resource of CG period #2 corresponding to the optimum beam, and to performs transmission of remaining repetitions on resources configured with non-first repetitions simultaneously, for example, when the number of repetitions is 4 times, transmission of a second repetition is performed on a 2^{nd} repetition resource of CG period #4, and transmission of a third repetition is performed on a 3^{rd} repetition resource of CG period #4, transmission of a fourth repetition is performed on a 4^{th} repetition resource of CG cycle #4.

It should be noted that configured grant periods for different times of repetitions can be determined according to the configuration of the base station, and the base station can configure the configured grant periods for different times of repetitions by means of bitmaps or code points, etc.

In some embodiments, a redundancy version (RV) sequence corresponding to one configured grant period with the plurality of TOs for repetition in the plurality of configured grant periods is {0, 0, 0,0}, or {0,3,0,3}, or {0,2,3,1}; or a RV corresponding to a plurality of configured grant periods with one TO for repetition in the plurality of configured grant periods is RV0.

It should be noted that, in embodiments of the present disclosure, the above steps S41 and S42 may be implemented independently, or may also be implemented in combination with any other embodiment in the present disclosure. For example, the above steps S41 and S42 may be implemented together with the steps S21 and S22 in the present disclosure, which is not specifically limited in embodiments of the present disclosure.

Referring to FIG. 6, FIG. 6 is a flowchart illustrating another method for determining a time-domain resource transmission position according to an embodiment of the present disclosure.

As illustrated in FIG. 6, the method is performed by a base station, and may include, but is not limited to, following steps.

At block S61, small data transmission (SDT) of a terminal device is received, and a target repetition transmission occasion (TO) is determined. The target repetition TO is a TO corresponding to an N-th repetition in the SDT, and N is a positive integer.

In an embodiment of the present disclosure, the terminal device determines the target SSB index by performing the SSB (synchronization signal and PBCH block) measurement. The target SSB index corresponds to the target beam direction, a target beam may be an optimum beam, and the target SSB index corresponds to an optimum beam direction. Based on this, the SDT is sent on the determined optimal beam, and the base station receives the SDT of the terminal device, and can determine the target repetition TO, in which the target repetition TO is the TO corresponding to the N-th repetition in the SDT, N is a positive integer.

It should be noted that, in an embodiment of the present disclosure, the target SSB index corresponds to the target beam direction, and the target beam may also be other beam except for the optimal beam, which is not specifically limited in an embodiment of the present disclosure.

At block S62, a target SSB index is determined according to the target repetition TO. The target SSB index corresponds to a target beam direction.

In some embodiments, the base station configures or indicates a value N in that the target repetition TO is the TO corresponding to the N-th repetition in the SDT.

It is noted that, in an embodiment of the present disclosure, each of the plurality of SSBs of an SSB burst corresponds to a TO corresponding to the N-th repetition in the SDT. By measuring the plurality of SSBs in the SSB burst, an SSB with a stronger channel quality is selected as the target SSB, the TO corresponding to the N-th repetition in the corresponding SDT is determined according to the target SSB, and the TO corresponding to the N-th repetition in the SDT is determined as the target repetition TO.

In an embodiment of the present disclosure, the terminal device may perform the SDT according to the target repetition TO after determining the target repetition TO.

It can be understood that, in an embodiment of the present disclosure, other repetitions except for the N-th repetition in the SDT may be associated with the target SSB for the target SSB index. Therefore, all repetitions in the SDT are determined under the case that the target SSB index is determined.

In some embodiments, a number of repetitions is M times, and N is less than or equal to M, M is a positive integer, and a number of TOs is taken by subtracting 1 from a sum of a number of SSBs and the number of repetitions M.

In an example embodiment, as illustrated in FIG. 3, there are 4 SSBs in an SSB set (a synchronization signal and PBCH block set) configured by CG (configured grant), and the number of repetitions M is 4 times, then it may determine the number of TOs by subtracting 1 from a sum of a number of SSBs, 4, and the number of repetitions, 4, and the number of TOs is obtained as 7.

Assuming that N is 1, first 4 TOs are used for a first repetition in transmission of the SDT, and last three TOs are used for remaining three repetitions in transmission of the SDT respectively.

Of course, the example shown in FIG. 3 is only for illustration. In embodiments of the present disclosure, N can also be 3, and can also be that a third repetition in the SDT is associated with the target SSB index, then a first TO is used for a first repetition in transmission of the SDT, a second TO is used for a second repetition in transmission of the SDT, 3rd, 4th, 5th, and 6th TOs are used for a third repetition in transmission of the SDT, and a 7th TO is used for a fourth repetition in transmission of the SDT.

In some embodiments, SSB indexes associated with TOs corresponding to M times of repetitions are the target SSB index.

In an embodiment of the present disclosure, on the basis that the target repetition TO is associated with the target SSB index, in the M times of repetitions, except that the target repetition TO of the N-th repetition is associated with the target SSB index, other times of repetitions can also be associated with the target SSB index.

In some embodiments, the TOs corresponding to the M times of repetitions form one target physical uplink shared channel occasion (PO).

In an example embodiment, please continue to refer to FIG. 3, there are 4 SSBs in an SSB set (a synchronization signal and PBCH block set) configured by CG (configured grant), and the number of repetitions M is 4 times, then it may determine the number of TOs by subtracting 1 from a sum of a number of SSBs, 4, and the number of repetitions, 4, and the number of TOs is obtained as 7.

In an example, assuming that N is 1, first 4 TOs are used for a first repetition in transmission of the SDT, and last three TOs are used for remaining three repetitions in transmission of the SDT respectively. The terminal device determines that a signal quality of SSB#2 corresponding to TO#2 is optimum by performing the SSB measurement, and the terminal device may select TO#2 to perform the first repetitions in the SDT, and then complete remaining three repetitions through TO#4, TO#5 and TO#6.

TO#2, TO#4, TO#5 and TO#6 can form one target PO.

It is noted that TO#4, TO#5 and TO#6 occupied by the remaining three repetitions may also be associated with SSB#1.

It is also noted that in an embodiment of the present disclosure, TO#0, TO#1, TO#2, TO#3, TO#4, TO#5, and TO#6 may form one target PO.

In another example, assuming that N is 1, first 4 TOs are used for a first repetition in transmission of the SDT, and last three TOs are used for remaining three repetitions in transmission of the SDT respectively. The terminal device determines that a signal quality of SSB#1 corresponding to TO#1 is optimum by performing the SSB measurement, and the terminal device may select TO#1 to perform the first repetition in the SDT, and then complete remaining three repetitions through TO#4, TO#5 and TO#6.

TO#1, TO#4, TO#5 and TO#6 can form one target PO.

It is noted that TO#4, TO#5 and TO#6 occupied by the remaining three repetitions may also be associated with SSB#1.

It is also noted that in an embodiment of the present disclosure, TO#0, TO#1, TO#2, TO#3, TO#4, TO#5, and TO#6 may form one target PO.

In the above example embodiments of the present disclosure, the number of TOs is that the number of SSBs, 4, plus the number of repetitions, 4, then minus 1, and the number of TOs is determined to be 7.

It is noted that, for M times of repetitions of the SDT, each SSB may correspond to M TOs, and the M TOs are used to perform M repetitions of the SDT. In this case, if there are K SSBs in the SSB burst, the number of TOs needs to be configured as K*M, where K and M are both positive integers.

However, in an embodiment of the present disclosure, it is simply required to configure the number of TOs as that the number of SSBs, K, plus the number of repetitions M then minus 1 thus implementing M repetitions of the SDT, which greatly saves time-frequency resources and improves a spectral efficiency.

In some embodiments, one configured grant period of the SDT comprises a plurality of Pos. A redundancy version (RV) sequence corresponding to TOs in the target PO are {0,0,0,0}, or {0,3,0,3}, or {0,2,3,1}. A RV corresponding to a TO in other POs except for the target PO in a plurality of POs is RV0.

By implementing embodiments of the present disclosure, the base station receives the SDT of the terminal device, and determines the target repetition TO, in which the target repetition TO is the TO corresponding to the N-th repetition in the SDT, and N is a positive integer, and determines the target SSB index according to the target repetition TO, in which the target SSB index corresponds to the target beam direction. Therefore, CG-SDT with repetitions may be implemented, time-frequency resources can be greatly saved, and a spectral efficiency can be improved.

Detailed description of the steps S61 and S62 in an embodiment of the present disclosure may refer to relevant description in the foregoing embodiment of the present disclosure, and details are not repeated here.

By implementing embodiments of the present disclosure, CG-SDT with repetitions may be implemented.

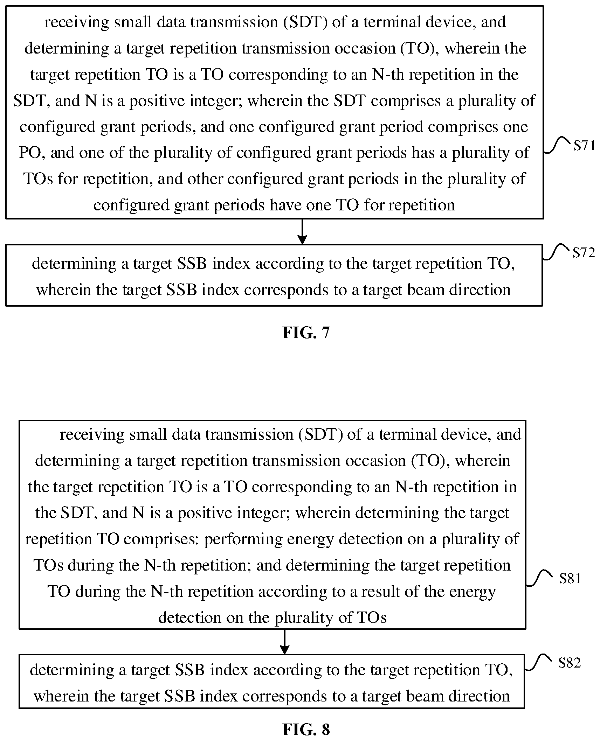

Referring to FIG. 7, FIG. 7 is a flowchart illustrating another method for determining a time-domain resource transmission position according to an embodiment of the present disclosure.

As illustrated in FIG. 7, the method is performed by a base station, and may include, but is not limited to, following steps.

At step S71, small data transmission (SDT) of a terminal device is received, and a target repetition transmission occasion (TO) is determined. The target repetition TO is a TO corresponding to an N-th repetition in the SDT, and N is a positive integer. The SDT includes a plurality of configured grant periods, and one configured grant period includes one PO, and one of the plurality of configured grant periods has a plurality of TOs for repetition, and other configured grant periods in the plurality of configured grant periods have one TO for repetition.

At step S72, a target SSB index is determined according to the target repetition TO. The target SSB index corresponds to a target beam direction.

In some embodiments, the base station configures or indicates an L value in an L-th repetition corresponding to the TO for repetition in the other configured grant periods, where L is a positive integer.

In some embodiments, a same hybrid automatic repeat request (HARQ) process number (HPN) is used for the plurality of configured grant periods.

In some embodiments, a redundancy version (RV) sequence corresponding to one configured grant period with the plurality of TOs for repetition in the plurality of configured grant periods is {0, 0, 0,0}, or {0,3,0,3}, or {0,2,3,1}; or a RV corresponding to a plurality of configured grant periods with one TO for repetition in the plurality of configured grant periods is RV0.

Detailed description of the steps S71 and S72 in an embodiment of the present disclosure may refer to relevant description in the foregoing embodiment of the present disclosure, and details are not repeated here.

It should be noted that, in embodiments of the present disclosure, the above steps S71 and S72 may be implemented independently, or may also be implemented in combination with any other embodiment in the present disclosure. For example, the above steps S71 and S72 may be implemented together with the steps S61 and S62 in the present disclosure, which is not specifically limited in embodiments of the present disclosure.

Referring to FIG. 8, FIG. 8 is a flowchart illustrating another method for determining a time-domain resource transmission position according to an embodiment of the present disclosure.

As illustrated in FIG. 8, the method is performed by a base station, and may include, but is not limited to, following steps.

At step S81, small data transmission (SDT) of a terminal device is received, and a target repetition transmission occasion (TO) is determined. The target repetition TO is a TO corresponding to an N-th repetition in the SDT, and N is a positive integer. determining the target repetition TO includes: performing energy detection on a plurality of TOs during the N-th repetition; and determining the target repetition TO during the N-th repetition according to a result of the energy detection on the plurality of TOs.

At step S82, a target SSB index is determined according to the target repetition TO. The target SSB index corresponds to a target beam direction.

In an embodiment of the present disclosure, the base station receives the SDT of the terminal device, and when the SDT is repeated for the Nth time, the base station performs the energy detection on the plurality of TOs. For example, a RSRP measurement is performed on a DMRS, and a highest signal quality is obtained through the measurement. The base station then may determine on which TO the N-th repetition is transmitted, such that relevant information of the SSB index can be obtained, and then, when the terminal device performs repetition SDT subsequently, the base station receives on the target beam direction corresponding to the same SSB index.

In some embodiments, the base station indicates a time gap between the plurality of TOs for repetition to the terminal device.

In an embodiment of the present disclosure, the base station indicates the terminal device the time gap between the plurality of TOs for repetition, render the terminal device to repeatedly perform two adjacent SDTs under the indicated time gap. Therefore, the base station may measure the energy of the plurality of TOs during the previous SDT in the time gap, and determine on which TO the repetition is transmitted in the previous SDT, such that the relevant information of the SSB index can be obtained, and then, when the terminal device performs repetition SDT subsequently, the base station receives on the target beam direction corresponding to the same SSB index. Therefore, time-domain resources can be effectively saved.

It should be noted that, in embodiments of the present disclosure, the above steps S81 and S82 may be implemented independently, or may also be implemented in combination with any other embodiment in the present disclosure. For example, the above steps S81 and S82 may be implemented together with the steps S61 and S62 and/or steps S71 and S72 in the present disclosure, which is not specifically limited in embodiments of the present disclosure.

In the above embodiments provided in the present disclosure, methods provided in embodiments of the present disclosure are introduced from the perspective of the base station and the terminal device. To achieve various functions in the methods provided in embodiments of the present disclosure, the base station and the terminal device may include a hardware structure and a software module, to achieve the above functions in the form of the hardware structure, the software module or a combination of the hardware structure and the software module. A certain function in the above functions may be performed by the hardware structure, the software module or a combination of the hardware structure and the software module.

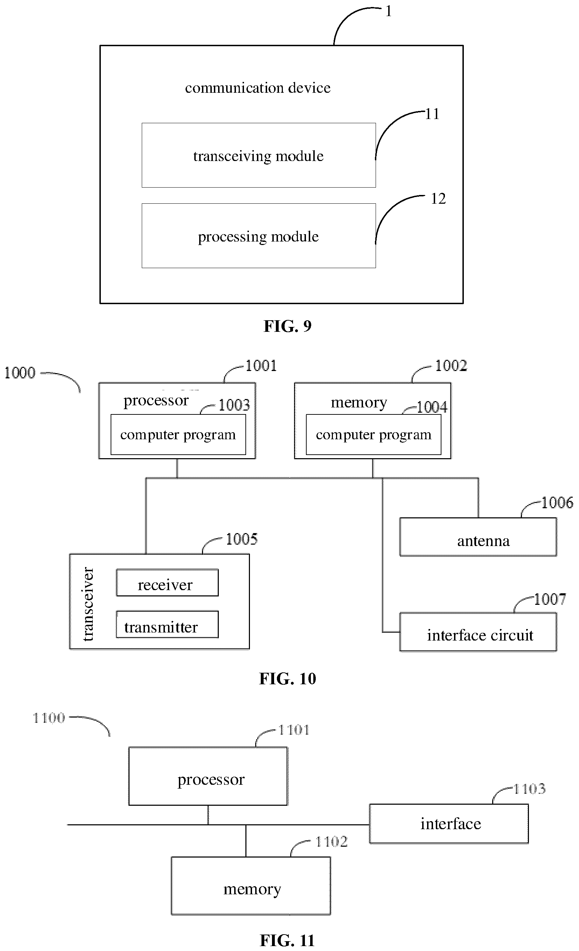

Referring to FIG. 9, FIG. 9 is a schematic diagram illustrating a structure of a communication device according to an embodiment of the present disclosure. The communication device 1 as illustrated in FIG. 9 may include a transceiver module 11 and a processing module 12. The transceiver module 11 may include a transmitting module and/or a receiving module. The transmitting module is configured to implement a transmitting function, the receiving module is configured to implement a receiving function, and the transceiver module 11 may implement the transmitting function and/or the receiving function.

The communication device 1 may be a terminal device or an apparatus in the terminal device, or an apparatus capable of being matched and used with the terminal device. Alternatively, the communication device 1 may be a base station or an apparatus in the base station, or an apparatus capable of being matched and used with the base station.

The communication device 1 is the terminal device.

The device includes a processing module 11 configured to configured to perform a synchronization signal and PBCH block (SSB) measurement to determine a target SSB index, in which the target SSB index corresponds to a target beam direction; determine a target repetition transmission occasion (TO) according to the target SSB index; and perform small data transmission (SDT) according to the target repetition TO, in which the target repetition TO is a TO corresponding to an N-th repetition in the SDT, and N is a positive integer.

In some embodiments, N is pre-configured by a protocol, or configured or indicated by a base station.

In some embodiments, the processing module 11 is configured to perform signal quality measurements on a plurality of SSBs to determine a target SSB, and determine a target SSB index of the target SSB.

In some embodiments, a number of repetitions is M times, wherein N is less than or equal to M, M is a positive integer. SSB indexes associated with TOs corresponding to M times of repetitions are the target SSB index.

In some embodiments, the TOs corresponding to the M times of repetitions form one target physical uplink shared channel occasion (PO).

In some embodiments, a number of TOs is taken by subtracting 1 from a sum of a number of SSBs and the number of repetitions M.

In some embodiments, the SDT includes a plurality of configured grant periods, and one configured grant period includes one PO, and one of the plurality of configured grant periods has a plurality of TOs for repetition, and other configured grant periods in the plurality of configured grant periods have one TO for repetition.

In some embodiments, for an L-th repetition corresponding to the TO for repetition in the other configured grant periods, L is pre-configured by a protocol, or configured or indicated by a base station, L is a positive integer.

In some embodiments, a same hybrid automatic repeat request (HARQ) process number (HPN) is used for the plurality of configured grant periods.

In some embodiments, the processing module 11 is configured to determine that a redundancy version (RV) sequence corresponding to one configured grant period with the plurality of TOs for repetition in the plurality of configured grant periods is {0, 0, 0,0}, or {0,3,0,3}, or {0,2,3,1}; or determine that a RV corresponding to a plurality of configured grant periods with one TO for repetition in the plurality of configured grant periods is RV0.

The communication device 1 is the base station.

The device includes a transceiver module 11, configured to receive small data transmission (SDT) of a terminal device, and determine a target repetition transmission occasion (TO), in which the target repetition TO is a TO corresponding to an N-th repetition in the SDT, and N is a positive integer; and
a processing module 12, configured to determine a target SSB index according to the target repetition TO, in which the target SSB index corresponds to a target beam direction.

In some embodiments, N is pre-configured by a protocol, or configured or indicated by a base station.

In some embodiments, a number of repetitions is M times, wherein N is less than or equal to M, M is a positive integer, and SSB indexes associated with TOs corresponding to M times of repetitions are the target SSB index.

In some embodiments, the TOs corresponding to the M times of repetitions form one target physical uplink shared channel occasion (PO).

In some embodiments, a number of TOs is taken by subtracting 1 from a sum of a number of SSBs and the number of repetitions M.

In some embodiments, the SDT includes a plurality of configured grant periods, and one configured grant period includes one PO, and one of the plurality of configured grant periods has a plurality of TOs for repetition, and other configured grant periods in the plurality of configured grant periods have one TO for repetition.

In some embodiments, for an L-th repetition corresponding to the TO for repetition in the other configured grant periods, L is pre-configured by a protocol, or configured or indicated by a base station, L is a positive integer.

In some embodiments, a same hybrid automatic repeat request (HARQ) process number (HPN) is used for the plurality of configured grant periods.

In some embodiments, the transceiver module 11 is configured to perform energy detection on a plurality of TOs during the N-th repetition; and determine the target repetition TO during the N-th repetition according to a result of the energy detection on the plurality of TOs.

In some embodiments, the transceiver module 11 is configured to indicate a time gap between the plurality of TOs for repetition to the terminal device.

Regarding the communication device 1 in the foregoing embodiments, a specific manner in which each module executes operations has been described in detail in embodiments related to the method, and will not be described in detail herein. The communication device 1 provided in the above embodiments of the present disclosure achieves the same or similar beneficial effects as the resource configuration methods provided in some of the above embodiments, and will not be repeated here.

Referring to FIG. 10, FIG. 10 is a schematic diagram illustrating a structure of another communication device 1000 according to an embodiment of the present disclosure. The communication device 1000 may be a base station, or may also be a terminal device, or may also be a chip, a system on chip or a processor that supports the base station to implement the above method, or a chip, a system on chip or a processor that supports the terminal device to implement the above method. The communication device 1000 may be configured to implement the method described in the method embodiments, and may refer to descriptions in the method embodiments.

The communication device 1000 may include one or more processors 1001. The processor 1001 may include a general-purpose processor or a dedicated processor. For example, the processor may be a baseband processor or a central processor. The baseband processor may be configured to process a communication protocol and communication data, and the central processor may be configured to control a communication device (e.g., a base station, a baseband chip, a terminal device, a terminal device chip, a DU or CU, etc.), to execute a computer program, and process data of the computer program.

Optionally, the communication device 1000 may further include one or more memories 1002 storing a computer program 1004. The processor 1001 executes the computer program 1004 so that the communication device 1000 performs the method as described in the above method embodiments. Optionally, the memory 1002 may further store data. The communication device 1000 and the memory 1002 may be independently configured or integrated together.

Optionally, the communication device 1000 may further include a transceiver 1005 and an antenna 1006. The transceiver 1005 may be referred to as a transceiving unit, a transceiver or a transceiving circuit, which may be configured to achieve a transceving function. The transceiver 1005 may include a receiver and a tramsmitter. The receiver may be referred to as a receiver device or a receiving circuit, etc., for implementing a receiving function; the tramsmitter may be referred to as a tramsmitter device or a tramsmitting circuit, etc. for implementing a tramsmitting function.

Optionally, the communication device 1000 may further include one or more interface circuits 1007. The interface circuit 1007 is configured to receive code instructions and transmit the code instructions to the processor 1001. The processor 1001 runs the code instructions so that the communication device 1000 performs the method according to the above method embodiment.

The communication device 1000 is a terminal device: the processor 1001 is configured to execute step S21 and S22 in FIG. 2; step S41 and S41 in FIG. 4; and step S61 and S62 in FIG. 6, etc.

The communication device 1000 is a base station: the transceiver 1005 is configured to execute step S71 in FIG. 7, step S81 in FIG. 8; and the processor 1001 is configured to execute step S72 in FIG. 7, and step S82 in FIG. 8.

In an implementation, the processor 1001 may include a transceiver for implementing receiving and transmitting functions. For example, the transceiver may be a transceiving circuit, or an interface, or an interface circuit. The transceiving circuit, the interface or the interface circuit for implementing receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 1001 may store a computer program 1003. The computer program 1003 runs on the processor 1001 so that the communication device 1000 performs the method as described in the above method embodiments. The computer program 1003 may be solidified in the processor 1001, in which case the processor 1001 may be implemented by hardware.

In an implementation, the communication device 1000 may include a circuit that may implement a transmitting or receiving or communication function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor(BJT), bipolar CMOS(BiCMOS), silicon germanium(SiGe) and gallium arsenide(GaAs).

The communication device described in the above embodiments may be a terminal device, but the scope of the communication device described in the present disclosure is not limited thereto, and a structure of the communication device may not be subject to FIG. 10. The communication device may be a stand-alone device or may be a part of a larger device. For example, the communication device may be:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle device, a network device, a cloud device, an artificial intelligence device, etc.; and
(6) others, and so forth.

For a case where the communication device may be a chip or a system on chip, please refer to FIG. 11, which is a schematic diagram illustrating a structure of a chip according to an embodiment of the present disclosure.

The chip 1100 includes a processor 1101 and an interface 1103. A number of processors 1101 may be one or more, and a number of interfaces 1103 may be more than one.

For a case where the chip is used to implement functions of a terminal device in embodiments of the present disclosure:
the interface 1103 is configured to receive code instructions and transmit the code instructions to the processor, and
the processor 1101 is configured to run the code instructions to execute the method for determining the time-domain resource transmission position as described in some embodiments above.

For a case where the chip is used to implement functions of a base station in embodiments of the present disclosure:
the interface 1103 is configured to receive code instructions and transmit the code instructions to the processor; and
the processor 1101 is configured to run the code instructions to execute the method for determining the time-domain resource transmission position as described in some embodiments above.

Optionally, the chip 1100 also includes a memory 1102 for storing necessary computer programs and data.

Those skilled in the related art may understand that various illustrative logical blocks and steps listed in embodiments of the present disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as beyond the protection scope of embodiments of the present disclosure.

A resource configuration system is further provided in embodiments of the disclosure. The system includes a communication device serving as a terminal device in embodiments of FIG. 9 and a communication device serving as a base station, or the system includes a communication device serving as a terminal device and a communication device serving as a base station in embodiments of FIG. 10.

A computer-readable storage medium storing instructions is further provided in the disclosure. When the instructions are executed, functions of the any one method embodiment are implemented.

A computer program product is further provided. The computer program product implements functions of the above any one method embodiment when executed by a processor.

In the above embodiments, the functions may be wholly or partially implemented by a software, a hardware, a firmware, or any combination thereof. When implemented by a software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another via wire (such as a coaxial cable, a fiber optic, a digital subscriber line (DSL)) or wireless (such as infrared, wireless, microwave). The computer-readable storage medium may be any available medium that may be accessed by a computer or a data storage device such as a server that integrates one or more of the available media, and a data center. The readable medium may be a magnetic medium (such as a floppy disk, a hard disk and a magnetic tape), an optical medium (such as a digital video disk (DVD)), or a semiconductor medium (such as a solid state disk (SSD)).

Those ordinary skilled in the art can understand that first, second, and other numbers involved in the present disclosure are only for convenience of description, and are not used to limit the scope of embodiments of the present disclosure, and does not indicate an order.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

Corresponding relationships indicated by tables in the present disclosure may be configured or predefined. Values of information in tables are only examples, and may be configured as other values, which are not limited in the disclosure. When corresponding relationships between information and parameters are configured, it is not always necessary to configure all corresponding relationships indicated in tables. For example, in the tables in the present disclosure, corresponding relationships indicated by some rows may not be configured. For another example, appropriate transformations and adjustments, such as splitting and merging, may be made based on the above tables. Names of parameters shown in headers in the tables may be other names understandable by the communication device, and values or representations of the parameters may be other values or representations understandable by the communication device. When the above tables are implemented, other data structures may be used, and for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solution. Those skilled in the art may adopt different methods for each specific application to implement the described functions, but such implementation should not be considered beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the present disclosure shall be subject to the protection scope of claims.

## Claims

1. A method for determining a time-domain resource transmission position, performed by a terminal device, comprising:
performing a synchronization signal and PBCH block (SSB) measurement to determine a target SSB index, wherein the target SSB index corresponds to a target beam direction;
determining a target repetition transmission occasion (TO) according to the target SSB index; and
performing small data transmission (SDT) according to the target repetition TO, wherein the target repetition TO is a TO corresponding to an N-th repetition in the SDT, and N is a positive integer.

2. The method according to claim 1, wherein N is pre-configured by a protocol, or configured or indicated by a base station.

3. The method according to claim 1 or 2, wherein performing the synchronization signal and PBCH block (SSB) measurement to determine the target SSB index comprises:
performing signal quality measurements on a plurality of SSBs to determine a target SSB, and determining a target SSB index of the target SSB.

4. The method according to any one of claims 1 to 3, wherein a number of repetitions is M times, wherein N is less than or equal to M, M is a positive integer, and a number of TOs is taken by subtracting 1 from a sum of a number of SSBs and the number of repetitions M.

5. The method according to claim 4, wherein SSB indexes associated with TOs corresponding to M times of repetitions are the target SSB index.

6. The method according to claim 5, wherein the TOs corresponding to the M times of repetitions form one target physical uplink shared channel occasion (PO).

7. The method according to claim 6, wherein one configured grant period of the SDT comprises a plurality of POs,
a redundancy version (RV) sequence corresponding to TOs in the target PO are {0,0,0,0}, or {0,3,0,3}, or {0,2,3,1}; or
a RV corresponding to a TO in other POs except for the target PO in a plurality of POs is RV0.

8. The method according to claim 1, wherein the SDT comprises a plurality of configured grant periods, and one configured grant period comprises one PO, and one of the plurality of configured grant periods has a plurality of TOs for repetition, and other configured grant periods in the plurality of configured grant periods have one TO for repetition.

9. The method according to claim 8, wherein for an L-th repetition corresponding to the TO for repetition in the other configured grant periods, L is pre-configured by a protocol, or configured or indicated by a base station, L is a positive integer.

10. The method according to claim 8, wherein a same hybrid automatic repeat request (HARQ) process number (HPN) is used for the plurality of configured grant periods.

11. The method according to claim 8, wherein a redundancy version (RV) sequence corresponding to one configured grant period with the plurality of TOs for repetition in the plurality of configured grant periods is {0, 0, 0,0}, or {0,3,0,3}, or {0,2,3,1}; or
a RV corresponding to a plurality of configured grant periods with one TO for repetition in the plurality of configured grant periods is RV0.

12. A method for determining a time-domain resource transmission position, performed by a base station, comprising:
receiving small data transmission (SDT) of a terminal device, and determining a target repetition transmission occasion (TO), wherein the target repetition TO is a TO corresponding to an N-th repetition in the SDT, and N is a positive integer; and
determining a target SSB index according to the target repetition TO, wherein the target SSB index corresponds to a target beam direction.

13. The method according to claim 12, wherein N is configured or indicated for a terminal device.

14. The method according to claim 12 or 13, wherein a number of repetitions is M times, wherein N is less than or equal to M, M is a positive integer, and a number of TOs is taken by subtracting 1 from a sum of a number of SSBs and the number of repetitions M.

15. The method according to claim 14, wherein SSB indexes associated with TOs corresponding to M times of repetitions are the target SSB index.

16. The method according to claim 15, wherein the TOs corresponding to the M times of repetitions form one target physical uplink shared channel occasion (PO).

17. The method according to claim 16, wherein one configured grant period of the SDT comprises a plurality of POs,
a redundancy version (RV) sequence corresponding to TOs in the target PO are {0,0,0,0}, or {0,3,0,3}, or {0,2,3,1}; or
a RV corresponding to a TO in other POs except for the target PO in a plurality of POs is RV0.

18. The method according to claim 12, wherein the SDT comprises a plurality of configured grant periods, and one configured grant period comprises one PO, and one of the plurality of configured grant periods has a plurality of TOs for repetition, and other configured grant periods in the plurality of configured grant periods have one TO for repetition.

19. The method according to claim 18, further comprising:
configuring or indicating for the terminal device with an L value in an L-th repetition corresponding to the TO for repetition in the other configured grant periods, where L is a positive integer.

20. The method according to claim 18, wherein a same hybrid automatic repeat request (HARQ) process number (HPN) is used for the plurality of configured grant periods.

21. The method according to claim 18, wherein a redundancy version (RV) sequence corresponding to one configured grant period with the plurality of TOs for repetition in the plurality of configured grant periods is {0, 0, 0,0}, or {0,3,0,3}, or {0,2,3,1}; or
a RV corresponding to a plurality of configured grant periods with one TO for repetition in the plurality of configured grant periods is RV0.

22. The method according to any one of claims 12 to 21, wherein determining the target repetition TO comprises:
performing energy detection on a plurality of TOs during the N-th repetition; and
determining the target repetition TO during the N-th repetition according to a result of the energy detection on the plurality of TOs.

23. The method according to any one of claims 12 to 22, further comprising:
indicating a time gap between the plurality of TOs for repetition to the terminal device.

24. A communication device, comprising:
a processing module, configured to perform a synchronization signal and PBCH block (SSB) measurement to determine a target SSB index, wherein the target SSB index corresponds to a target beam direction; determine a target repetition transmission occasion (TO) according to the target SSB index; and perform small data transmission (SDT) according to the target repetition TO, wherein the target repetition TO is a TO corresponding to an N-th repetition in the SDT, and N is a positive integer.

25. A communication device, comprising:
a transceiver module, configured to receive small data transmission (SDT) of a terminal device, and determine a target repetition transmission occasion (TO), wherein the target repetition TO is a TO corresponding to an N-th repetition in the SDT, and N is a positive integer; and
a processing module, configured to determine a target SSB index according to the target repetition TO, wherein the target SSB index corresponds to a target beam direction.

26. A communication device, comprising a processor and a memory having a computer program stored thereon, wherein the processor is configured to execute the computer program stored in the memory, causing the device to perform the method according to any one of claims 1 to 11; or the processor is configured to execute the computer program stored in the memory, causing the device to perform the method according to any one of claims 12 to 23.

27. A communication device, comprising: a processor and an interface circuit; wherein,
the interface circuit is configured to receive code instructions and transmit the code instructions to the processor; and
the processor is configured to run the code instructions to execute the method according to any one of claims 1 to 11; or to run the code instructions to execute the method according to any one of claims 12 to 23.

28. A computer-readable storage medium for storing instructions, when the instructions are executed, the method according to any one of claims 1 to 11 is implemented; or, when the instructions are executed, the method according to any one of claims 12 to 23 is implemented.
